# DEMANDE DE BREVET EUROPEEN

(11) **EP 2 412 617 A1**
(43) Date de publication de la demande: **01.02.2012**
(21) Numéro de dépôt: 10150862.0
(22) Date de dépôt: 15.01.2010
(51) Int. Cl.: B62H 3/00, B60S 13/02

(54) **Dispositif pour la manoeuvre et le stationnement d'un véhicule à deux roues.**

(30) Priorité: 17.11.2008 FR 0857798
(71) Demandeur: Minssen, Eric, 78610 Le Perray en Yvelines (FR)
(72) Inventeur: Minssen, Eric, 78610 Le Perray en Yvelines (FR)
(74) Mandataire: Pontet, Bernard

(57) **Abrégé**

Dispositif (10) pour un véhicule (21) à deux roues muni d'une béquille centrale (23) pour maintenir le véhicule en soulevant une roue, en général la roue arrière (25). Ce dispositif comprend :
- un plateau extérieur (12) prévu pour recevoir et supporter la première roue (22) dudit véhicule (21) lorsque ladite béquille (23) est déployée,
- un plateau principal (11) prévu pour recevoir et supporter ladite béquille (23) lorsqu'elle est en position déployée,
- des moyens de liaison (13) reliant ledit plateau principal (11) et ledit plateau extérieur (12), ladite liaison étant rigide au moins dans le plan horizontal.

Le dispositif (10) comprend en outre des moyens de rotation (16,20) desdits plateaux principal (11) et extérieur (12) autour de la position dudit plateau principal (11), d'au moins 90 degrés voire 180 degrés, pour permettre un quart de tour ou un demi tour du véhicule par rotation du dispositif.

## Description

La présente invention concerne un dispositif pour la manoeuvre et le stationnement d'un véhicule à deux roues.

Le domaine de l'invention est celui du « matériel de manipulation d'un véhicule à deux roues » et plus particulièrement des véhicules à deux roues motorisés tels que les motos ou les scooters.

Les véhicules à deux roues motorisés présentent des dimensions imposantes et un poids important. Ces caractéristiques deviennent rapidement des inconvénients lorsqu'il faut manipuler ces véhicules à la force des bras lors, par exemple, des opérations de manoeuvre ou de stationnement.

Ces inconvénients s'amplifient lorsque ces opérations de stationnement sont à réaliser dans des lieux fermés ou cloisonnés et présentant peu d'espace pour la manipulation de ces véhicules, tels que les garages privés ou des places de stationnement. En effet, les emplacements de stationnement exigus ou encombrés nécessitent des manipulations longues et malcommodes voire fatigantes pour stationner, ou pour quitter le stationnement. Mais surtout, il est souvent nécessaire de manoeuvrer le véhicule entre sa position d'arrivée et sa position de départ lorsque le lieu de stationnement ne dispose que d'un seul et même accès pour l'entrée et la sortie.

Dans le cas, par exemple, du stationnement à domicile, il est très souvent nécessaire, soit de réaliser un demi-tour, soit de faire quelques mètres en marche arrière pour se mettre dans la bonne direction, et ce à la force des bras et des jambes tout en maintenant le véhicule à deux roues en équilibre.

Ces inconvénients ont poussé les acteurs du domaine des véhicules à deux roues motorisés à mettre au point des dispositifs d'aide à la manipulation de ces véhicules lors de leur stationnement.

Ainsi, les demandes de brevets US2007196202 et W02008009117 présentent des dispositifs pour le stationnement d'une moto permettant d'accueillir la moto sur toute sa longueur et de tourner la moto d'un demi-tour. Ces dispositifs permettent ainsi de stationner une moto en montant sur le dispositif en marche avant avec les deux roues, puis de faire subir une rotation à la moto pour quitter le dispositif et le stationnement également en marche avant.

Les documents US 2003/215313, US 4 901 647 et US 6 123 310 décrivent le même type de dispositif, avec les mêmes inconvénients.

Cependant, les dispositifs décrits dans ces demandes de brevets présentent de grandes dimensions nécessitant ainsi une surface au sol large pour leur utilisation. En effet, les dispositifs divulgués dans ces demandes présentent, au moins en longueur une dimension supérieure à la longueur de la moto et nécessitent du coup une surface au sol qui correspond à un cercle de diamètre supérieur à la longueur de la moto.

Par ailleurs, les dispositifs décrits dans ces demandes ont une architecture induisant des formes agressives pour les utilisateurs, c'est-à-dire qu'ils comportent des éléments saillants, gênants voire dangereux, même en l'absence de moto.

Un autre type de dispositif est décrit par le document GB 2 391 208, présentant un petit plateau rotatif que l'on dispose sous la béquille centrale d'une motocyclette. On installe alors la moto sur cette béquille, qui repose elle-même sur le plateau, permettant ainsi de faire tourner l'ensemble.

Ce type de dispositif n'est cependant utilisable qu'avec les rares modèles de véhicules qui sont équilibrés sur la béquille centrale, c'est-à-dire pour lesquels il est possible de maintenir en l'air la roue avant et la roue arrière en même temps. Même pour ce type de véhicule, la manoeuvre de rotation nécessite alors une certaine attention pour garder les roues avant et arrière en l'air pendant ce temps et éviter que les roues ne frottent sur le sol.

En outre, l'épaisseur du plateau sous la béquille élève d'autant la position du véhicule une fois supporté par la béquille, ce qui amplifie de façon importante l'effort nécessaire pour l'installer sur cette même béquille.

Un but de la présente invention est de remédier à ces inconvénients.

Un autre but de l'invention est de proposer un dispositif pour la manoeuvre et/ou le stationnement d'un véhicule à deux roues nécessitant moins de surface au sol que les dispositifs actuels.

Un autre but de l'invention est de proposer un dispositif pour la manoeuvre et/ou le stationnement d'un véhicule à deux roues d'une architecture moins agressive pour les utilisateurs et moins gênante pour le passage, y compris d'autres véhicules tels qu'une voiture.

Un autre but est de minimiser ou tout du moins ne pas augmenter l'effort nécessaire pour installer et stabiliser le véhicule à deux roues en position de stationnement.

Il est aussi recherché de minimiser l'effort et l'attention nécessaires pour effectuer la manoeuvre de rotation du véhicule à deux roues une fois celui-ci sur le dispositif.

Cet objectif est atteint avec un dispositif pour un véhicule à deux roues, ledit véhicule comportant une première roue et une deuxième roue situées de part et d'autre d'au moins un élément de support sensiblement central, dit béquille centrale, solidaire dudit véhicule et agencé pour être déployé lorsque ledit véhicule est à l'arrêt, de façon à prendre appui sur le sol et soulever et maintenir la deuxième roue dudit véhicule dans une position haute, typiquement la roue arrière, dans laquelle ladite deuxième roue n'est pas en contact avec le sol.

Selon l'invention, ce dispositif comprend :
- une première partie, dite plateau extérieur, prévue pour recevoir et supporter la première roue, typiquement la roue avant dudit véhicule, lorsque cette béquille est déployée,
- une deuxième partie, dite plateau principal, prévue pour recevoir et supporter cette béquille lorsqu'elle est en position déployée,
- des moyens de liaison reliant ce plateau principal et ce plateau extérieur selon une liaison sensiblement rigide dans le plan horizontal (suffisamment pour que la rotation de l'un des plateaux entraîne une rotation de l'autre plateau), et optionnellement souple de haut en bas.

Ce dispositif comprend en outre des moyens de rotation de ces plateaux principal et extérieur d'au moins 90 degrés et de préférence au moins 180 degrés, autour de la position du plateau principal, pour passer d'une première configuration de ces plateaux, dite d'arrivée en marche avant, à une deuxième configuration, dite de départ en marche avant ; et inversement pour passer de ladite deuxième configuration à ladite première configuration.

Comparativement entre la première configuration (arrivée en marche avant) et la deuxième configuration (départ en marche avant), dans le cas d'une rotation de 180°, le plateau extérieur se trouve en deux positions sensiblement opposées entre elles par rapport au plateau central.

Le dispositif selon l'invention nécessite moins de surface au sol que les dispositifs de l'état de la technique qui permettent un support complet du véhicule. En effet, la longueur du dispositif selon l'invention est plus petite que la longueur du véhicule à deux roues. La plus grande dimension du dispositif selon l'invention est sensiblement égale à la distance entre la béquille du véhicule en position déployée et la roue avant du véhicule. Cette distance est bien plus petite que la longueur de la moto.

On notera que chacun des deux plateaux représente approximativement la surface minimale nécessaire pour porter la partie correspondante du véhicule quand il est en position de stationnement. Dans de nombreux modes de réalisation, ces plateaux ne sont reliés que par des éléments légers dont la seule fonction est de les solidariser entre eux en rotation. Ces éléments de liaison n'ont pas besoin de pouvoir porter par eux-mêmes le poids du véhicule, ce qui est un facteur d'économie en matériau et encombrement.

En admettant que la rotation pour passer de la configuration de départ en marche avant à la configuration d'arrivée en marche avant se fait dans le sens inverse de la rotation pour passer de la configuration d'arrivée en marche avant à la configuration de départ en marche avant, la surface nécessaire pour le fonctionnement du dispositif selon l'invention ne dépasse pas un cercle dont le diamètre est égal à la longueur de la moto. Dans un cas typique, comme sur la plupart des véhicules à deux roues, la béquille centrale est disposée plus près d'une roue que de l'autre (généralement plus près de la roue arrière que de la roue avant) par rapport au centre de gravité du véhicule. Dans ces conditions, les encombrements latéraux peuvent être différents d'un côté à l'autre mais sans changer notablement sur le total, et peuvent de plus permettre des implantations encore plus optimisées, ainsi que décrit plus loin.

De plus, du fait que la roue la plus chargée (par rapport à la position de béquille) repose elle-même sur le plateau extérieur, elle se trouve à la même hauteur que la ligne d'appui de la béquille centrale. L'effort à fournir pour installer le véhicule sur la béquille n'est donc pas amplifié par rapport à la situation normale où le véhicule est entièrement sur le sol.

Selon une version avantageuse, du dispositif selon l'invention les moyens de rotation peuvent comprendre un disque à billes, mobile en rotation sur un chemin de roulement similaire à une butée à billes (un plateau comprenant deux disques superposés en rotation l'un sur l'autre sur des billes circulant dans une piste circulaire), fixé au dessous plateau principal. Ce disque à billes réalise la rotation des plateaux principal et extérieur d'au moins 180 degrés. De préférence, les plateaux présentent un profil peu épais avec des rebords recourbés ou inclinés vers le bas. Ainsi, le dispositif selon l'invention présente une architecture compacte et non agressive pour les utilisateurs, et les rebords vers le bas permettent au véhicule de monter plus facilement sur les plateaux et sans endommager les pneumatiques.

Par ailleurs, les moyens de rotation peuvent avantageusement comprendre au moins un rouleau, fixé au plateau extérieur et sur lequel le plateau extérieur prend appui, l'axe dudit rouleau étant de préférence aligné avec le centre de rotation du plateau principal. Le plateau extérieur peut présenter plusieurs rouleaux. Dans un exemple de réalisation non limitatif, le plateau extérieur peut intégrer quatre rouleaux adéquatement disposés pour supporter la roue de façon stable. La présence de tels rouleaux au niveau du plateau extérieur permet de faciliter la rotation des plateaux principal et extérieur autour de la position du plateau central, surtout lorsque le véhicule à deux roues est disposé sur le dispositif selon l'invention et pèse de façon importante sur ce plateau extérieur.

Certains véhicules à deux roues présentent, en plus de la béquille centrale, une béquille latérale.

Avantageusement, le dispositif selon l'invention peut en outre comprendre un plateau latéral, ou patin latéral, prévu pour recevoir une telle béquille latérale. Le plateau latéral est prévu pour supporter une telle béquille latérale, le plus souvent avant ou pendant le déploiement de la béquille centrale.

Ce plateau latéral peut être fixé au sol, ou éventuellement monté de manière rigide au plateau principal de façon à ce que ledit plateau latéral soit entrainé en rotation par le plateau principal lors de la rotation desdits plateaux principal et extérieur autour de la position du plateau principal.

Selon une version particulièrement avantageuse, le dispositif selon l'invention peut en outre comprendre des moyens de rappel automatique des plateaux principal et extérieur, et éventuellement du plateau latéral fixé rigidement au plateau principal, depuis la configuration de départ en marche avant jusqu'à la configuration d'arrivée en marche avant, une fois que le véhicule à deux roues a quitté le dispositif.

En effet, sans de tels moyens de rappel, l'utilisateur doit manuellement repositionner le dispositif selon l'invention dans la configuration arrivée en marche avant, soit après un départ en marche avant soit juste avant une arrivée en marche avant.

La fonction de rappel permet à l'utilisateur d'éviter de telles manipulations.

Les moyens de rappels peuvent comprendre des moyens de motorisation.

Les moyens de rappel peuvent aussi comprendre des moyens élastiques fixés, au moins indirectement, d'une part au sol ou à un objet fixe et d'autre part à l'ensemble plateau principal et plateau extérieur (et éventuellement au plateau latéral). Ces moyens élastiques sont mis en charge (par exemple tendus ou compressés) par la rotation des plateaux lors du passage de la configuration d'arrivée en marche avant à la configuration de départ en marche avant.

Lorsque l'utilisateur réalise le passage du dispositif selon l'invention de la configuration arrivée en marche avant à la configuration départ en marche avant, les moyens élastiques sont tendus ou compressés sous l'action manuelle ou motorisée de l'utilisateur, et emmagasinent suffisamment d'énergie pour réaliser le retour du dispositif à la configuration arrivée en marche avant. Une fois que le dispositif est libéré du véhicule à deux roues, juste après le départ de ce véhicule, le dispositif selon l'invention est forcé par les moyens élastiques à une rotation dans le sens opposé et revient à la configuration arrivée en marche avant.

Pour éviter que les moyens de rappels ne réalisent trop tôt le retour en configuration arrivée en marche avant, c'est-à-dire avant que le véhicule à deux roues n'ait quitté entièrement le dispositif, ce dernier peut en outre comprendre un élément léger et résistant disposé solidairement entre le plateau extérieur et le plateau principal, de façon à recevoir la deuxième roue (typiquement la roue arrière) du véhicule lorsque la première roue (typiquement la roue avant) du véhicule quitte le plateau extérieur, lors du départ du véhicule. Ainsi, à travers la deuxième roue (typiquement la roue arrière), le véhicule garde un contact avec le dispositif tout au long du processus de libération du dispositif, jusqu'à ce que la dernière roue du véhicule ne quitte le dernier plateau (typiquement il s'agit de la roue arrière quittant le plateau extérieur, pour une moto reposant sur roue avant et béquille).

Le dispositif selon l'invention comprend en outre une butée de fin de course, possiblement réglable, réalisant le bon positionnement des plateaux dans la configuration arrivée en marche avant, en fin de rappel automatique. La butée peut être fixée au sol ou à un autre élément fixe.

Les moyens de liaison reliant de manière rigide (au moins dans le plan horizontal) le dispositif peuvent comprendre au moins un tube reliant les plateaux central et extérieur entre eux et laissant ainsi un espace vide entre eux, sensiblement parallèle à la direction d'arrivée ou du départ. Le ou les tubes peuvent être des tubes cintrés en acier entourant l'un ou l'autre des plateaux, et peuvent renfermer un ou des moyens élastiques formant les moyens de rappel ou y participant. Par ailleurs, les tubes en acier peuvent être fixés aux plateaux par tous moyens connus de l'homme du métier, par exemple par soudage.

Par ailleurs, les tubes peuvent s'étendre sur la périphérie des plateaux et notamment du plateau extérieur, pour protéger les utilisateurs des bords ou tranches des plateaux et faciliter la montée et la descente du véhicule à deux roues sur les plateaux.

Les moyens de liaison reliant les plateaux principal et extérieur peuvent être de longueur réglable, de manière que la distance entre le plateau extérieur et le plateau principal soit réglable. Ainsi, il est possible d'adapter la distance entre le plateau extérieur et le plateau central à la distance entre la béquille centrale d'un véhicule à deux roues et la première roue (typiquement la roue avant) de ce véhicule.

Selon une version avantageuse du dispositif de l'invention, les systèmes de liaison des plateaux comprennent des moyens de pivot d'au moins un desdits plateaux par rapport à l'autre autour d'un axe horizontal perpendiculaire à la direction reliant lesdits plateaux. Ainsi, en laissant une liberté de rotation dans la direction horizontale et perpendiculaire à la direction reliant lesdits plateaux, il est possible de pallier les irrégularités du sol et de s'affranchir des problèmes de planéité du sol.

De préférence, la largeur du plateau principal est choisie pour être plus grande que la largeur de la béquille centrale la plus large existante pour un véhicule à deux roues, ou du moins pour un groupe choisi de tels véhicules. Il est aussi possible d'utiliser un plateau principal dont la largeur est réglable, ou de prévoir un plateau interchangeable des moyens de pivotement pour pouvoir utiliser différents modèles de plateau selon le véhicule, par exemple en taille ou en résistance. Ainsi, il est possible d'utiliser le dispositif selon l'invention pour stationner et manipuler tout véhicule à deux roues présentant une béquille centrale, quelque soit la largeur de la béquille ou le poids du véhicule.

La surface supérieure du plateau principal peut être traitée pour être antidérapante vis-à-vis des pieds de la béquille lors de son déploiement. Il peut s'agir par exemple d'un revêtement antidérapant par inclusion de fibres ou particules, ou d'une matière suffisamment souple pour que les pieds de la béquille puissent s'enfoncer légèrement dans sa surface, telle que du caoutchouc ou du bois. Cette surface peut aussi présenter un aspect incorporant des aspérités dans lesquelles viendront s'engager les pieds de la béquille lorsque l'on recule le véhicule en maintenant les pieds de la béquille contre cette surface.

Selon une particularité avantageuse, le dispositif de l'invention peut en outre comprendre une cale ou un plateau, dit chemin avant, disposé devant le plateau extérieur lorsque les plateaux principal et extérieur sont dans la configuration d'arrivée en marche avant, d'une hauteur sensiblement égale à la hauteur du plateau extérieur. Ce chemin avant permet de recevoir la première roue (typiquement la roue avant) du véhicule juste avant le déploiement de la béquille. Ce déploiement entraine un petit recul du véhicule, par exemple de entre 5cm et 20cm, pendant que les pieds de la béquille sont maintenus contre la surface de support. Pendant cette manipulation, la première roue passe du chemin avant au plateau extérieur sans avoir à passer de dénivellation pour monter sur ce plateau extérieur, ce qui minimise l'effort nécessaire.

Plus particulièrement dans le cas d'un plateau extérieur supportant la roue avant, le fait d'utiliser un chemin avant fixé au sol permet de limiter la longueur nécessaire pour le plateau mobile vers l'extérieur du dispositif mobile, et donc de limiter la longueur de l'ensemble du dispositif.

Cette fonction de « chemin avant » peut aussi être réalisée par une extension fixe du plateau extérieur (il est dimensionné pour englober cette distance de recul), ou par une extension amovible ou escamotable liée au plateau extérieur et reposant sur le sol lors de la manoeuvre de béquillage.

Bien entendu, le dispositif selon l'invention peut comprendre des moyens de motorisation réalisant le passage desdits plateaux principal et extérieur de la configuration d'arrivée en marche avant à la configuration de départ en marche avant. Les moyens de motorisation peuvent être disposés par exemple sous le plateau principal et/ou sous le plateau extérieur, ou sur le côté de l'un ou l'autre.

Par ailleurs, dans un exemple de réalisation non limitatif, chacun des plateaux (principal, extérieur, latéral ou le chemin avant) peut être réalisé en une plaque d'acier de 3mm à 10mm d'épaisseur et de préférence 5mm, par exemple sensiblement circulaire, présentant ainsi une rigidité suffisante tout en gardant une faible hauteur.

Des modes de réalisation variés de l'invention sont prévus, intégrant selon l'ensemble de leurs combinaisons possibles les différentes caractéristiques optionnelles exposées ici.

D'autres avantages et caractéristiques de l'invention apparaîtront à l'examen de la description détaillée d'un mode de mise en oeuvre nullement limitatif, et des dessins annexés sur lesquels :
- les FIGURES 1, 2 et 3 sont des représentations schématiques d'un exemple de dispositif selon l'invention, respectivement selon une vue de dessus, une vue de dessous et une vue de côté ;
- les FIGURES 4, 5 et 6 sont des représentations schématiques de la manoeuvre de demi tour lors du stationnement d'un véhicule à deux roues avec le dispositif des FIGURES 1 à 3 ; et
- les FIGURES 7 et 8 sont des représentations schématiques du dispositif des FIGURES 1 à 3 muni de moyens de rappel ;
- les FIGURE 9 et 10 sont des représentations schématiques de la surface au sol occupé par le dispositif des FIGURES 1 à 3.

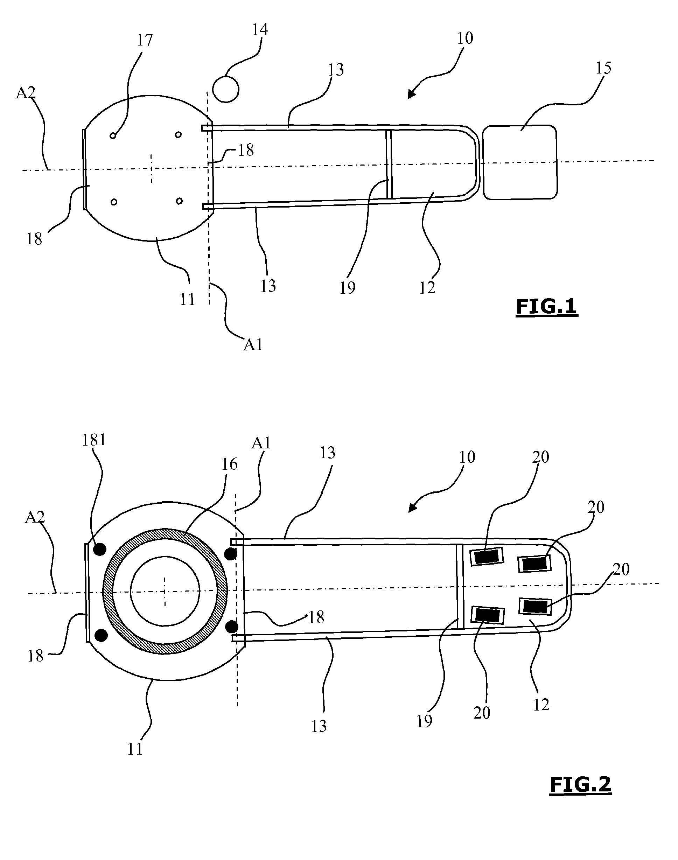

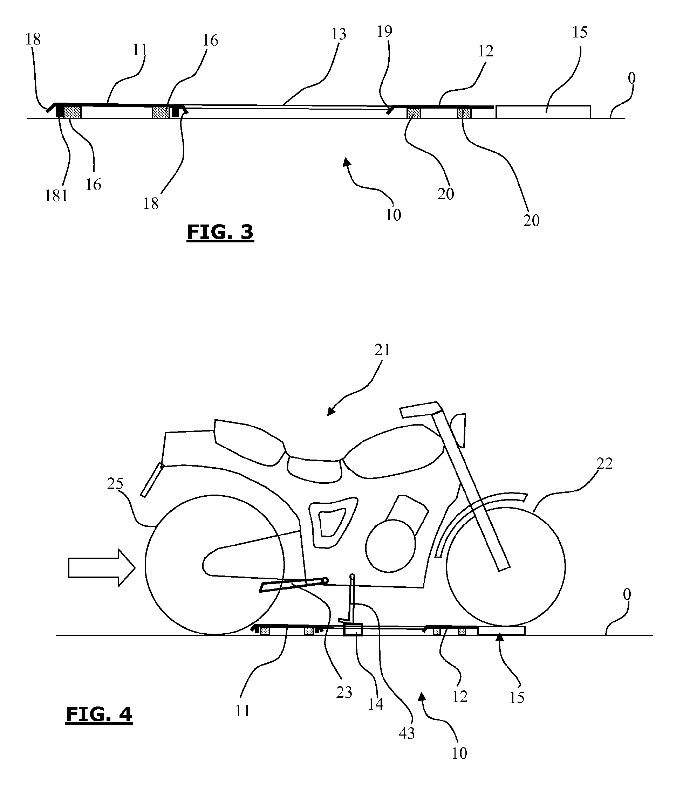

On va maintenant décrire, en référence aux FIGURES 1 et 3, un exemple de réalisation d'un dispositif 10 selon l'invention.

Dans l'exemple représenté ici, le véhicule 21 à deux roues est du type qui repose sur la roue avant et la béquille centrale. L'entrée se fera donc par le plateau principal, ici appelé aussi « plateau central », et la roue avant reposera sur le plateau extérieur, ici aussi appelé « plateau avant ».

Le même mode de réalisation, ou un autre très proche, peut cependant aussi être utilisé pour un véhicule du type reposant sur la roue arrière lorsqu'il est installé sur sa béquille centrale. Le dispositif sera alors implanté de façon à ce que l'entrée se fasse en marche avant en commençant par le plateau extérieur, de façon à ce que la roue arrière repose sur ce plateau extérieur une fois la béquille déployée et reposant sur le plateau central.

Le dispositif comprend un plateau principal 11, un plateau avant 12, ainsi qu'un tube en acier 13 reliant le plateau principal 11 au plateau avant 12.

Le dispositif comprend également un plateau latéral 14 et un plateau fixe 15, dit chemin avant, disposé devant le plateau avant 12.

Le plateau principal 11 est équipé d'un disque à billes 16. Une face de ce disque 16 est fixée, par soudure, vissage ou clipsage, sous le plateau principal 11 et l'autre face est fixée au sol. Pour cela, un ou plusieurs trous 17 dans le plateau principal 11 permet d'accéder à ces 4 points de fixation. Pour faciliter le passage du véhicule à deux roues, 2 bords 18 du plateau principal 11 sont inclinés et reçoivent chacun dessous deux butées 181 légèrement moins hautes que le disque à bille, pour venir en contact avec le sol et s'opposer au basculement du plateau principal 11 lors du passage du véhicule.

La largeur du plateau principal est adaptée à la largeur d'une béquille centrale d'un véhicule à deux roues afin d'assurer le béquillage sur celui-ci. Dans le présent exemple, la largeur du plateau principal 11 est de 380mm. L'épaisseur et la matière du plateau principal 11 permettent de résister à la charge du passage du véhicule à deux roues et de son conducteur ainsi qu'aux efforts de poinçonnage de la béquille.

Dans le présent exemple, le plateau principal est en acier de 5mm d'épaisseur pour une charge de 300kg. La longueur du plateau principal 11 est de 300mm et la hauteur totale de 15mm. Ces caractéristiques sont adaptées à chaque modèle ou catégorie de véhicule à deux roues.

Le plateau avant 12 comporte un bord 19 plié pour faciliter le passage du véhicule à deux roues. Sa surface permet de recevoir la roue avant du véhicule une fois la béquille centrale déployée sur le plateau principal 11. Son épaisseur et sa matière permettent de résister à la charge du passage du deux roues et de son conducteur.

Dans le présent exemple, le plateau avant est en acier de 5mm d'épaisseur, environ 240mm de largeur et environ 260mm de longueur.

Le plateau avant 12 est équipé de quatre rouleaux 20. L'axe de chacun de ces rouleaux 20 est plutôt dirigé vers le centre du plateau principal 11 afin de favoriser la rotation sans glissement du plateau avant autour du plateau principal 11.

Dans le présent exemple, la charge unitaire des rouleaux 20 est de 75Kg. La hauteur totale du plateau avant 12 est de 28mm.

Le plateau avant 12 est relié au plateau principal 11 par un tube 13 cintré en acier, de diamètre 16mm et d'épaisseur 1mm et de longueur 850mm avec un entraxe de 225 mm.

Le tube 13 est fixé par collage, vissage, soudage ou clipsage au plateau avant 12. Il est solidaire du plateau avant 12 et débordant de la périphérie du plateau avant 12 pour protéger l'utilisateur de la tranche du plateau avant 12 et faciliter la descente par l'avant du véhicule à deux roues.

Afin de s'affranchir des problèmes de planéité du sol lors de l'utilisation, les deux extrémités du tube 13 sont liées au plateau principal 11 par liaison pivot d'un axe horizontal A1. L'axe de pivot horizontal A1 est perpendiculaire à l'axe A2 de liaison des plateaux principal 11 et avant 12. L'assemblage choisi, non représenté, permet d'assurer la liaison pivot tout en étant démontable.

Afin de s'adapter aux différentes longueurs, roue avant-béquille centrale de chaque 2 roues, le tube 13 est de préférence télescopique et verrouillable en longueur.

Le chemin avant 15, est formé d'une plaque en bois ou plastique par exemple de la largeur du plateau avant, environ 240 mm dans le présent exemple, et d'épaisseur environ 20 mm. Sa longueur est d'environ 240mm soit égale ou supérieure à la distance dont reculera le véhicule 2 roues lors du béquillage central. Il permet à la roue avant de dépasser le plateau avant 12 sans redescendre au sol et de limiter ainsi l'effort à produire pour béquiller sur le plateau principal 11.

Afin de sécuriser le véhicule à deux roues lors de la phase de descente du conducteur, il est possible, voire conseillé pour les véhicules à deux roues lourds, d'utiliser une béquille latérale. A ce stade, la roue avant du véhicule à deux roues est sur le chemin avant 15 et non sur le sol, la béquille latérale est alors en dehors du plateau central et est trop courte pour toucher le sol. Afin de recréer les conditions d'utilisation de la béquille latérale, il est donc possible de fixer au sol un plateau latéral réalisant l'accueil d'une béquille latérale, de même épaisseur que le chemin avant pour pouvoir utiliser la béquille latérale. Le plateau latéral 14 peut se présenter sous la forme d'un cercle de diamètre 100mm ou une plaque carré de dimensions 100mmX100mm et d'une épaisseur environ 20mm.

Le plateau latéral 14 est avantageusement fabriqué dans un matériau résistant au poinçonnage de la béquille latérale, par exemple en bois ou en plastique. Le plateau latéral 14 sera fixé au sol après avoir fixé le plateau principal 11 et réalisé quelques tests de franchissement pour bien définir sa position.

Il est également possible de rattacher le plateau latéral 14 au plateau principal 11 par le biais d'une patte de liaison rigide.

Nous allons maintenant décrire, en référence aux FIGURES 4 à 6, les principales étapes, du stationnement d'un véhicule à deux roues 21 avec le dispositif 10.

### 1) Arrivée du deux roues en marche avant

En arrivant, le dispositif se trouve dans la configuration arrivée en marche avant. Le plateau avant 12 se situe au-delà du plateau principal 11 et aligné avec le chemin avant 15, tel que représenté en FIGURE 4. Suivant cet alignement, le conducteur roule au pas jusqu'à ce que la roue avant 22 du véhicule à deux roues 21 soit sur le chemin avant 15. La roue avant 22 a alors franchi d'abord le plateau principal 11 puis le plateau avant 12. Selon le poids, la maniabilité du véhicule 21 et les différentes pratiques, il est possible à ce stade de béquiller latéralement, sur le plateau latéral 14 optionnel.

On remarque que la position de ce plateau latéral 14 permet de repérer facilement la bonne position d'avancement pour commencer le déploiement de la béquille centrale 23. Ce plateau peut être dimensionné de façon à ce que la moto soit forcément à la bonne position dès lors que la béquille latérale 43 repose sur lui. Ce plateau latéral 14 peut aussi être plus grand, permettant d'accueillir la béquille latérale de plusieurs modèles différents de moto. Il pourra alors comporter un ou plusieurs repères indiquant l'emplacement où doit reposer la béquille latérale pour que la moto soit bien positionnée, pour un ou plusieurs modèles de moto.

Le conducteur commence par déployer la béquille latérale 43, puis il avance ou recule légèrement la moto pour ajuster la position de cette béquille latérale 43 exactement au dessus du plateau latéral 14, comme illustré en FIGURE 4.

Il peut alors faire reposer la moto par sa béquille latérale 43 sur ce plateau latéral 14, avant de commencer le déploiement de la béquille centrale 23. Dès lors que le plateau latéral 14 est fixé sur le sol à une position déterminée en fonction de la géométrie de la moto, la bonne position de la béquille latérale 43 sur le plateau latéral 14 indiquera aussi la bonne position de la béquille centrale 23 sur le plateau principal 11.

Cette manoeuvre de béquillage latérale préalable au béquillage central est d'ailleurs recommandée pour des raisons de sécurité, voire indispensable, en particulier pour les motos très lourdes pour les capacités musculaires du conducteur.

### 2) Béquillage sur la béquille centrale

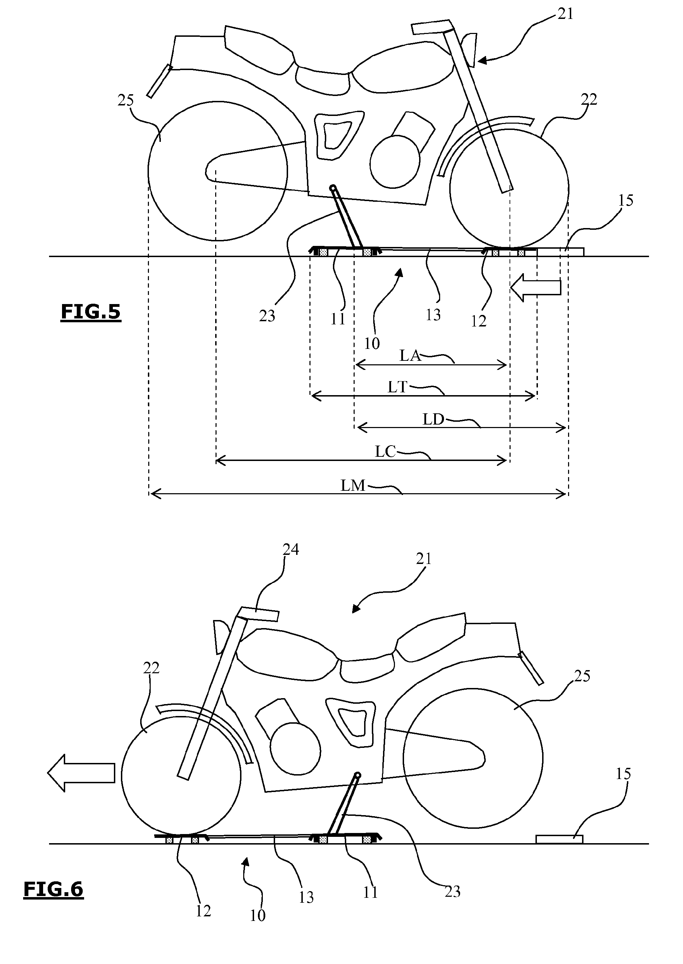

Une fois descendu de son véhicule 21, le conducteur procède alors au déploiement de la béquille centrale 23. Les dimensions et localisations des différents composants du produit sont conçues pour que, à cette position d'arrêt, la béquille centrale 23 prenne un appui relativement centré sur le plateau principal 11. Une fois béquillée, la roue avant 22 du véhicule 21 aura reculé pour reposer sur le plateau avant 12, tel que représenté en FIGURE 5.

### 3) Rotation du deux roues

En étant à côté de son véhicule deux roues 21, le conducteur fait tourner sa moto autour du plateau principal 11, en poussant par exemple sur le guidon 24. Le plateau avant 12 supportant la roue avant 22 décrit alors un cercle concentrique au plateau principal 11. Ainsi, avec un faible effort et dans un espace restreint, le véhicule 21 a effectué, par exemple, un demi-tour sur place, tel que représenté en FIGURE 6.

### 4) Départ du deux roues en marche avant

Le conducteur monte sur son véhicule, moteur allumé et en appui sur ses pieds, il pousse son véhicule pour quitter la béquille centrale 23, de la même façon que s'il reposait sur le sol, à partir de la configuration de départ illustré en FIGURE 6. La roue avant 22 quitte alors le plateau avant 12, pendant que la roue arrière 25 quitte le plateau principal 11 puis franchit le plateau avant 12. Le véhicule à deux roues a quitté son stationnement en marche avant et le dispositif 10 se trouve en configuration départ en marche avant.

Il est alors nécessaire, en partant ou en arrivant, de refaire tourner à vide le dispositif 10 pour le replacer dans sa configuration initiale, c'est-à-dire la configuration arrivée en marche avant. Ce replacement peut soit se faire manuellement soit de manière automatique grâce, par exemple, à des moyens de rappel.

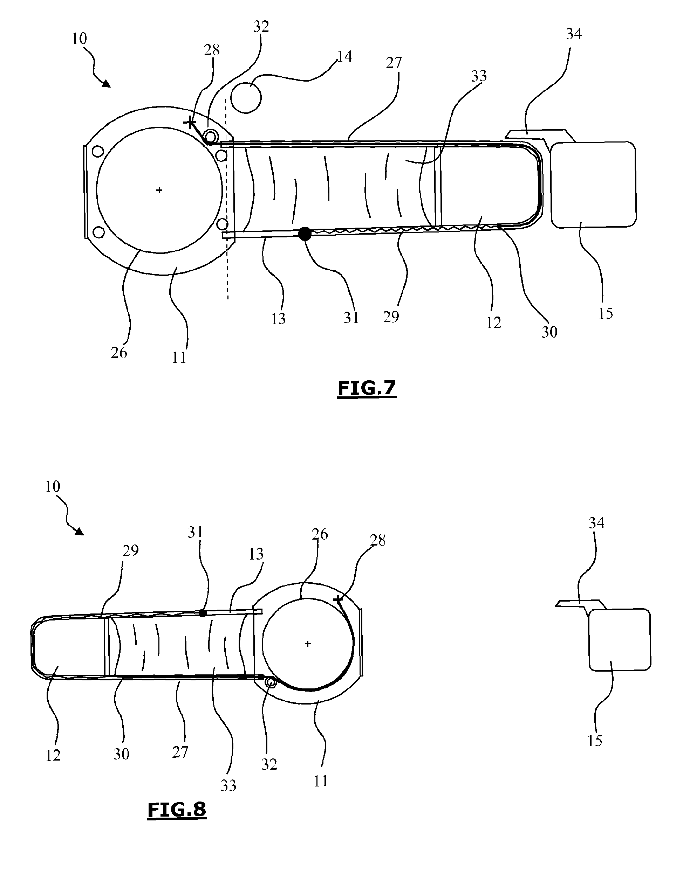

Nous allons maintenant décrire, en référence aux FIGURES 7 et 8, un exemple de moyens de rappel réalisant le rappel automatique du dispositif 10 dans sa configuration initiale, c'est-à-dire la configuration arrivée en marche avant

Les moyens de rappel qui vont être décrits dans le cadre du présent exemple permettent de profiter de l'opération de rotation du véhicule à deux roues 21 pour tendre un mécanisme de rappel intégré.

Une fois l'opération de départ réalisée, le dispositif 10 à vide peut revenir à la position initiale et est ainsi prêt pour une nouvelle arrivée du véhicule à deux roues 21 en marche avant.

Le mécanisme est totalement invisible, il trouve sa place sous le plateau principal 11 et dans le tube cintré 13, tel que représenté en FIGURE 7.

La face interne du plateau principal 11 est équipée d'une couronne d'entraînement fixe 26. Un câble ou équivalent 27 dont le point de départ est fixé au sol en un point 28, chemine le long de la couronne 26 puis à l'intérieur du tube cintré 13 pour être accroché à par exemple un élastique de rappel 29 en un point 30. Celui-ci se fixe dans le tube cintré 13 en point 31. Un galet 32 assure le bon guidage du câble 27 entre la couronne 26 et l'entrée du tube 13.

L'énergie de rappel est alors emmagasinée par l'élastique 29 lors de la rotation du dispositif 10 vers sa configuration de départ en marche avant représentée en FIGURE 8. Une toile 33 ou autres matériaux résistants, disposée entre le plateau principal 11 et le plateau avant 12 et fixée de part et d'autre au tube 13 permet dans la phase de départ, de maintenir le dispositif 10 en ligne lorsque la roue arrière 25 est entre le plateau principal 11 et le plateau avant 12, c'est-à-dire lorsque la roue avant 22 a déjà quitté le plateau avant 12.

Cette toile constitue ainsi entre les deux plateaux un élément intermédiaire non porteur, qui repose lui-même sur le sol lorsque que le véhicule roule dessus. Cela permet en particulier de limiter la quantité de matériau utilisé, ainsi que le poids du dispositif et son encombrement à l'état démonté.

Puis, dès que la roue arrière 25 quitte le plateau avant 12, le dispositif 10 pivote à vide sous la force de rappel de l'élastique 29 tendu et s'aligne avec le chemin avant 15.

Une butée de fin de course 34, fixée au sol ou au chemin avant 15, permet d'ajuster l'alignement du plateau avant 12 avec le chemin avant 15.

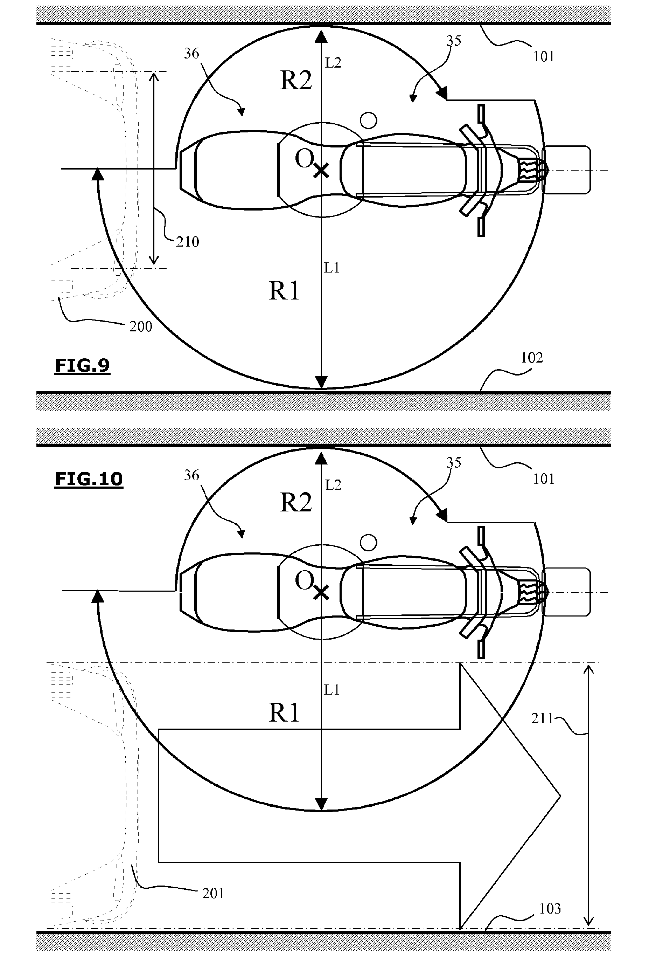

Nous allons maintenant décrire un exemple d'une implantation au sol du dispositif 10 en référence aux FIGURE 9 et 10.

La base du plateau principal 11 est fixée au sol, par des vis accessibles depuis le dessus de ce plateau 11. Le chemin avant est chevillé au sol ainsi que le plateau latéral optionnel. Si la surface le permet, il est possible de fixer les éléments du dispositif 10 à l'aide d'un fort adhésif double face.

L'aire au sol à préserver pour le cas le plus courant du demi-tour est minimum. De par le positionnement de la béquille 23 centrale qui est décalée vers l'arrière sur le véhicule à deux roues 21, l'aire R1 décrite par la partie 35 avant du véhicule 21 (par rapport à la béquille 23 reposant sur le plateau principal 11) est bien plus grande que l'aire R2 décrite par la partie 36 arrière du véhicule 21. Cette aire R2 occupe donc une largeur L2 sur un côté, qui est moins grande que la largeur L1 occupée par l'aire R1 sur l'autre côté. Cela permet de placer au mieux le système dans les contraintes d'espace, soit pas nécessairement au centre d'un garage mais par exemple plus proche d'un mur 101 du côté de la petite largeur L2 que de l'autre côté.

Ces caractéristiques permettent par exemple laisser du côté L1, entre le véhicule 21 stationné et le mur opposé 103, le passage 211 sans gêne d'une voiture 201, pour stationner là ou pour accéder à une seconde place située au delà de la zone de stationnement du véhicule à deux roues 21.

Avantageusement, le dispositif a une hauteur faible, environ de 30mm au maximum. Cette hauteur est inférieure à la garde au sol d'une voiture, et en permet donc le stationnement ou le passage en l'absence du véhicule 21 à deux roues. Par ailleurs, la largeur maximale L1 du dispositif est bien plus faible que la largeur de la voie 210 d'une voiture 200, celui-ci peut ainsi être disposé de façon à passer entre les roues d'une voiture lorsque celle-ci passe par dessus. Une voiture 200 peut donc traverser l'emplacement d'implantation sans abimer ses pneumatiques ni provoquer de cahots.

De façon générale pour tous les modes de réalisation, on comprend bien que la longueur totale LT (cf. FIGURE 5 et 9) du dispositif 10 peut se contenter d'être égale à la distance d'appui, c'est à dire la distance entre les points de contact au sol de la moto les plus éloignés entre eux, soit les points de contact au sol :
- d'une part de la première roue (celle sur laquelle la moto repose lorsque la béquille centrale est déployée : la roue avant 22 dans l'exemple), et
- d'autre part de la béquille centrale 23 en position déployée.
   En particulier, on comprend bien que le dispositif peut ainsi être réalisé de façon à ce que la longueur totale LT de sa partie mobile soit très légèrement supérieure à cette longueur d'appui LA mais inférieure à la longueur du véhicule LM.
   Du fait que le point de contact au sol de la première roue est situé sensiblement à la verticale du centre de cette roue, la roue dépasse vers l'extérieur par rapport à sa surface de contact au sol. La longueur d'appui LA est donc inférieure à la longueur LD entre la béquille centrale 23 déployée et l'extrémité de la première roue 22. La longueur totale LT de la partie mobile du dispositif peut donc même être inférieure à la distance LD entre
- d'une part l'extrémité de la première roue (celle sur laquelle la moto repose lorsque la béquille centrale est déployée : la roue avant 22 dans l'exemple), et
- d'autre part le point de contact au sol de la béquille centrale 23 qui est le plus éloigné de la première roue lorsque cette béquille centrale est en position déployée.

Les dispositifs de l'art antérieur qui supportent les deux roues de la moto doivent nécessairement avoir une longueur égale ou supérieure à la distance LC entre les points de contact au sol des deux roues 22 et 25.

On voit que l'invention permet ainsi de réaliser un dispositif d'une longueur LT nettement inférieure à celle de ces dispositifs connus, et donc aussi une moins grande surface couverte lors de la rotation.

Le véhicule à deux roues peut être tout type de moto, scooter, cyclomoteur, etc. Le dispositif peut être utilisé pour faciliter des manoeuvres même en l'absence de stationnement ou d'arrêt prolongé.

Il est à noter que l'expression de « véhicule à deux roues » utilisée ici peut aussi recouvrir certains types de véhicules hybrides comportant par exemple à l'avant et/ou à l'arrière deux roues jumelées, qui sont suffisamment proches l'une de l'autre pour garder la largeur générale d'un véhicule dit « deux roues ». En particulier, le véhicule concerné ne doit pas être vu comme strictement limité par les catégories légales telles que celles concernant les permis de conduire.

Ces deux roues avants, sur certains modèles, ont un écartement qui ne suffirait pas à assurer l'équilibre latéral en virage, mais peuvent s'incliner par rapport au sol tout en conservant toutes les deux un contact avec le sol, permettant ainsi au véhicule de s'incliner vers l'intérieur du virage pour compenser la force centrifuge.

Si besoin, le plateau extérieur (portant les roues avant dans notre exemple) pourra être prévu d'une largeur suffisante pour accueillir ces deux roues avant, ou bien comprendre deux plateaux séparés reliés entre eux de façon rigide dans le plan horizontal, en plus d'être reliés au plateau central.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif (10) pour un véhicule (21) a deux roues, ledit véhicule (21) comportant une première roue et une deuxième roue situées de part et d'autre d'au moins un élément de support central (23), dit béquille centrale, solidaire dudit véhicule (21) et agencé pour être déployé lorsque ledit véhicule (21) est à l'arrêt en vue de prendre appui sur le sol et soulever et maintenir la deuxième roue (25) dudit véhicule (21) dans une position haute, typiquement la roue arrière, dans laquelle ladite deuxième roue (25) n'est pas en contact avec le sol, ledit dispositif (10) étant **caractérisé en ce qu'**il comprend :
- une première partie (12), dite plateau extérieur, prévue pour recevoir et supporter la première roue (22) dudit véhicule (21) lorsque ladite béquille centrale (23) est déployée,
- une deuxième partie (11), dite plateau principal, prévue pour recevoir et supporter ladite béquille centrale (23) en position déployée,
- des moyens de liaison (13) reliant ledit plateau principal (11) et ledit plateau extérieur (12), ladite liaison étant rigide au moins dans le plan horizontal ;
ledit dispositif (10) comprenant en outre des moyens de rotation (16,20) desdits plateaux principal (11) et extérieur (12) autour de la position dudit plateau principal (11) d'au moins 90 degrés pour passer d'une première configuration desdits plateaux (11,12), dite d'arrivée en marche avant, à une deuxième configuration, dite de départ en marche avant, et vice versa ; ledit dispositif (10) présentant une longueur plus petite que la longueur dudit véhicule (21).

2. Dispositif selon la revendication précédente, **caractérisé en ce que** le plateau principal (11) et le plateau extérieur (12) sont séparés par un espace dans lequel la première roue (22) est supportée par le sol (0), directement ou par l'intermédiaire d'un élément non porteur (33).

3. Dispositif (10) selon l'une quelconque des revendications précédentes, **caractérisé en ce que** la longueur totale (LT) de sa partie mobile est inférieure à la distance (LD) entre :
- d'une part l'extrémité de la première roue (22), et
- d'autre part le point de contact au sol de la béquille centrale (23) le plus éloigné de ladite première roue lorsque ladite béquille centrale est en position déployée.

4. Dispositif selon l'une quelconque des revendications 1 ou 2, **caractérisé en ce que** sa plus grande dimension est sensiblement égale à la distance entre la béquille centrale (23) et la première roue (22) du véhicule (21).

5. Dispositif selon l'une quelconque des revendications précédentes, **caractérisé en ce que** les moyens de rotation comprennent un disque à billes (16) fixé au dessous du plateau principal (11), ledit disque à billes (16) réalisant la rotation des plateaux principal (11) et extérieur (12) d'au moins 90 degrés, et comprennent au moins un rouleau (20), fixé au plateau extérieur (12) et sur lequel ledit plateau extérieur (12) prend appui, l'axe dudit rouleau (20) étant aligné avec le centre de rotation du plateau principal (11).

6. Dispositif selon l'une quelconque des revendications précédentes, **caractérisé en ce qu'**il comprend en outre un plateau latéral (14) fixé au sol et d'une hauteur sensiblement égale à celle du plateau principal, agencé pour recevoir et supporter une béquille latérale avant le déploiement de la béquille centrale (23), ledit plateau latéral (14) étant positionné ou repéré de façon à recevoir et supporter la béquille latérale du véhicule seulement lorsque ledit véhicule est dans la bonne position pour le déploiement de la béquille centrale (23).

7. Dispositif selon l'une quelconque des revendications précédentes, **caractérisé en ce que** la largeur du plateau principal (11) est plus grande que la largeur de la béquille centrale du ou des véhicules auxquels il est destiné, et présente une largeur inférieure à la largeur déployée de la béquille latérale desdits véhicules.

8. Dispositif selon l'une quelconque des revendications précédentes, **caractérisé en ce que** le plateau extérieur (12) est agencé pour ne pas dépasser de l'avant du véhicule (21), lorsque celui-ci est installé sur la béquille centrale elle-même supportée par le plateau principal (11).

9. Dispositif selon l'une quelconque des revendications précédentes, **caractérisé en ce que** les moyens de liaison (13) reliant les plateaux principal (11) et avant (12) sont de longueur réglable de manière à ce que la distance entre le plateau avant (12) et le plateau principal (11) soit réglable.

10. Dispositif selon l'une quelconque des revendications précédentes, **caractérisé en ce que** les moyens de liaison (13) des plateaux central et extérieur (11,12) comprennent des moyens de pivot d'un desdits plateaux (11,12) par rapport à l'autre autour d'un axe horizontal (A1) perpendiculaire à la direction (A2) reliant lesdits plateaux (11,12).

11. Dispositif selon l'une quelconque des revendications précédentes, **caractérisé en ce qu'**il comprend en outre un plateau (15), dit chemin avant, indépendant en rotation du plateau principal (11) et reposant sur le sol devant le plateau extérieur (12) lorsque les plateaux principal (11) et extérieur (12) sont dans la configuration d'arrivée en marche avant,
d'une hauteur sensiblement égale à la hauteur du plateau extérieur (12),
ledit chemin avant (15) étant dimensionné et positionné pour recevoir et supporter la première roue (22) du véhicule (21) juste avant et au cours du déploiement de la béquille centrale (23),
de façon à ce que le recul dudit véhicule (21) lors dudit déploiement cause le passage de la première roue (22) dudit chemin avant (15) audit plateau extérieur (12).

12. Dispositif selon l'une quelconque des revendications précédentes, **caractérisé en ce qu'**il comprend en outre des moyens de motorisation réalisant le passage des plateaux principal (11) et extérieur (12) depuis la configuration d'arrivée en marche avant jusqu'à la configuration de départ en marche avant.

13. Dispositif selon l'une quelconque des revendications précédentes, **caractérisé en ce qu'**il comprend en outre des moyens de rappel automatique des plateaux principal (11) et extérieur (12) depuis la configuration de départ en marche avant jusqu'à la configuration d'arrivée en marche avant, après le départ du véhicule à deux roues.

14. Dispositif selon la revendication précédente, **caractérisé en ce qu'**il comprend en outre un élément (33) non porteur disposé solidairement entre le plateau extérieur (12) et le plateau principal (11), prévu pour recevoir la deuxième roue (25) du véhicule (21) en prenant appui sur le sol lorsque la première roue (22) dudit véhicule (21) quitte le plateau extérieur (12) lors du départ dudit véhicule (21).

15. Dispositif selon l'une quelconque des revendications 13 ou 14, **caractérisé en ce qu'**il comprend une butée de fin de course (34) réalisant le bon positionnement des plateaux (11,12) dans la configuration arrivée en marche avant, en fin de rappel automatique.
